# EUROPEAN PATENT SPECIFICATION

(11) **EP 3 260 317 B1**
(45) Date of publication and mention of the grant of the patent: **21.10.2020**
(21) Application number: 17177051.4
(22) Date of filing: 21.06.2017
(51) Int. Cl.: B60C 27/20

(54) **CHAIN TRACK**
RAUPENKETTE
CHENILLE

(30) Priority: 23.06.2016 FI U20160110 U; 23.06.2016 FI U20160111 U; 23.06.2016 FI U20160112 U; 23.06.2016 FI U20160113 U; 03.05.2017 FI U20170087 U
(43) Date of publication of application: 27.12.2017
(73) Proprietor: Koneosapalvelu Oy Aliranta, 35700 Vilppula (FI)
(72) Inventor: Aliranta, Mika, 35820 Mänttä (FI)
(74) Representative: Kolster Oy Ab

(56) References cited:
- FR-A1- 2 772 667
- US-A- 2 917 095
- US-A- 3 776 291

## Description

The invention relates to a chain track for use in a forest machine or another work machine, or in their trailers on one or more tyres so that the chain track is arranged to cover the tyre or tyres in their entirety, said chain track having grouser shoes that have a body and side guides, the body having an outer surface, inner surface, sides, and ends.

Chain tracks are used in forest machines, trailers, or other machines and devices that move on a soft terrain. The soft-terrain chain tracks on the market have a grouser shoe which is wider than the standard grouser shoe, and the grouser shoe is shaped according to the tyre profile. In the chain track, the gap between the grouser shoes is shorter than in the standard chain track, but is clearly distinguishable nevertheless.

The current chain tracks have the disadvantage that the grouser shoe is not perfectly flat, but shaped in accordance with the tyre profile. For this reason, the centre line of the chain track sinks deeper into ground than the edge of the chain track. The fair gap between the grouser shoes in the chain track allows soil to yield between the grouser shoes, breaking the surface of the ground. In addition, the fastening of the grouser shoes to each other is close to the rotation centre point of the tyre, whereby the grouser shoe has the chance to slide back and forth on the surface of the tyre, causing the tyre to wear and rolling resistance, whereby fuel consumption in high. In other words, the centre line of the fastening loops of the grouser shoes is far off, such as 100 mm, from the outer surface of the tyre. Furthermore, a grouser shoe turning back and forth on the tyre surface in the fastening of the grouser shoe breaks the surface of the terrain, such as the ground or road surface.

It is the purpose of the invention to bring forth a chain track having a grouser shoe that features a flat contact surface with the terrain and where the centre line of the fastening loops of the grouser shoes is close to the outer surface of the tyre.

US 3,776, 291 A discloses a protective armor-type device surrounding a pneumatic tyre coupled to the tyre to provide a positive drive there between. The tread of a rubber tire has circumferentially extending continuous grooves and transversely disposed notches formed thereon. A track assembly, comprising a plurality of closely coupled track shoes, circumferentially surrounds the tire and has drive lugs secured thereon which engage the notches. Circumferentially extending flexible belts are secured to the track shoes and engage the grooves.

US 2,917095 A discloses, according to the preamble of claim 1, a traction device for a vechicle with tyres of the like. The track shoe in the traction device is attached via a pivot pin to a connector plate connecting the track shoes together. Side guides are attached to the pivot pin and extend on the side of the tyre. There is a substantial gaps between the opposite edges of consecutive traction shoes.

FR 2 772 667 discloses a mining appliance pneumatic tyre protection. The protection for the pneumatic wheels of a mining appliance has an assembly of rectangular steel plates, which overlap at their lateral edges to form a circular running surface which covers and protects the tread of the rubber pneumatic tire. Two chains of links are at the junction between the side flanks and the tread of the tire. The steel plates are welded to the chain links at their side edges. One lateral edge of the steel plates is bent upwards into a raised horizontal tab to cover the inserted lateral edge of the neighboring plate. The outer surfaces of the steel plates carry projections as continuous or lateral ribs or chevron-shaped ribs. The chains have links in a multiple of the number of steel plates to be fitted. The prepared pairs of chains, with their welded steel plates, are cut to a length matching the circumference of the inflated pneumatic tire to be protected.

The above disadvantages may be eliminated and the above goals be reached by the inventive chain track which is characterised by what is disclosed in the characterising part of Claim 1. The preferred embodiments of the chain track are disclosed in the dependent claims.

In the inventive chain track, the distance between the inner surface of the body of the grouser shoe and the centre line of the fastening loop is 15 - 35 mm, measured from the inner surface of the body of the grouser shoe. The subordinate claims describe preferred embodiment of the invention.

The most important advantages of the invention are that the centre line of the fastening loops of the grouser shoes is close to the outer surface of the tyre, whereby the circumferential speed of the tyre outer surface and the track speed of the chain track are equal or almost equal, in which case no slipping or friction caused by it will be created between the tyre and chain track, due to which tyre wear is minor and fuel consumption is substantially lower as the rolling resistance/rotation resistance are reduced. The location of the fastening loops of the grouser shoes close to the centre line of the tyre outer surface prevents the back-and-forth movement of the grouser shoe or its movement on the tyre outer surface. The grouser shoe of the chain track is, at its load-bearing part, entirely flat whereby the surface pressure is evenly distributed on the area of the entire grouser shoe. The flat shape and symmetry of the grouser shoes make it possible to leave the gap in between the grouser shoes of the chain track small (less than 2 cm), whereby soil between the grouser shoes may not pass through the chain track. The chain track area simultaneously in contact with ground is larger than with the current technology. The lesser sinking of the chain track into ground lowers the rolling resistance, consequently reducing fuel consumption. The chain track does not damage forest roads. The end of the grouser shoe may be slightly bent towards the tyre, which improves the turning ability of the work machine. It is obvious that by the use of the invented chain track, damages to the soil or terrain will be lesser and consequently savings will be achieved in the repair costs of the terrain.

In the following the invention is explained in detail with reference to the accompanying drawings.

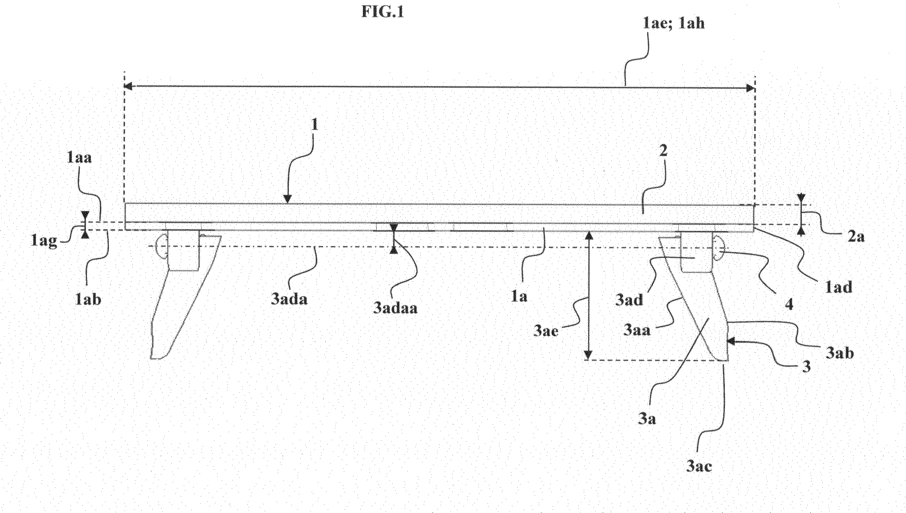

Figure 1 shows an inventive grouser shoe as seen perpendicularly from the front.
Figure 2 shows two interconnected grouser shoes of Figure 1 as seen perpendicularly from the end.

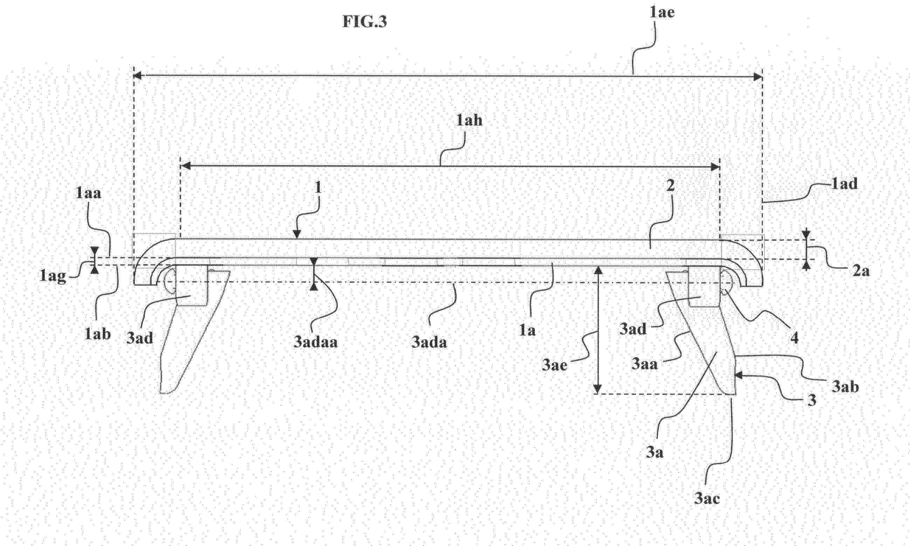

Figure 3 shows an inventive grouser shoe as seen perpendicularly from the front. The ends of the grouser shoes are bent inwards.

The Figures show the following parts and points.

Grouser shoe 1 having a body 1a, traction elevations 2, and side guides 3 connected to the body,

The body 1a has an outer surface 1aa, inner surface 1ab, sides 1ac, and ends 1ad. The inner surface 1ab is against the tyres/tyres. The side guides 3 on the opposite sides of the body extend obliquely downwards and keep the chain track on the tyre/tyres.

The outer surface 1aa of the body has one or more traction elevations 2 extending outwards to facilitate the moving of the machine on a terrain, such as ground, road, etc.

The body 1a has a length 1ae. The body 1a has a width 1af. The body 1a has a thickness 1ag. The body 1a has a straight portion 1ah. The straight portion 1ah of the body is most advantageously the same as the width of the tyre, or advantageously at least 70 percent of the length 1ae of the body 1a.

The height of the traction elevation 2 is 2a. The height 2a of the traction elevation 2 (against ground) is most preferably 28 mm. In addition, traction studs that may be 25 - 70 mm high may be welded on the grouser shoe 1. On the inside of the grouser shoe 1 (on the inner surface 1ab of the body 1a, against the tyre) there may be a prior art, welded traction surface 10 - 20 mm which prevents the track from slipping on the tyre. The prior art traction stud may be on the traction elevation 2. The traction stud is not shown in the Figures.

The side guide 3 has a body 3a. The body 3a has an inner surface 3aa, outer surface 3ab, tip 3ac, and fastening loop 3ad. The inner surface 3aa is the surface on the tyre side. The chain track has a fastening loop 3ad from which the grouser shoes 1 are connected to each other in a manner known per se by a chain and by connecting means known per se. The side guide 3 has a height 3ae and a width 3af. The height 3ae of the side guide 3 is most advantageously 195 mm or more as measured from the body 1a to the tip 3ac of the side guide 3.

The distance 3adaa between the centre line 3ada of the fastening loop 3ad is, at its largest, 35 mm as measured from the inner surface 1ab of the body 1a of the grouser shoe 1, whereby the centre line 3ada of the fastening loop 3ad is almost at the outer surface of the tyre. In such a case, the circumferential speed of the tyre and the circumferential speed of the fastening loop 3ad are equal or almost equal, due to which the tyre will not wear inside the chain track. In addition, fuel consumption is as low as possible, because there is no friction between the tyre and the inner surface 1ab of the body 1a of the grouser shoe 1. The centre line 3ada of the fastening loop 3ad in this context refers to the semi-circular point at the inner end 3adaaa of the fastening loop 3ad, the inside point to which a chain ring of the combiner 4 join, which is usually at least partly round on its inner surface as regards it cross section. So, the centre line of the contact surface 4aa of the joining end 4a of the combiner 4 is on the same line as the centre line 3ada of the fastening loop 3ad when the chain track is straight. The centre line 3ada of the fastening loop 3ad is a so-called technical centre line in relation to the combiner 4. The contract surface 4aa refers to the inner surface of the joining end 4a of the combiner 4, which makes contact with the inner end 3adaaa of the fastening loop 3ad.

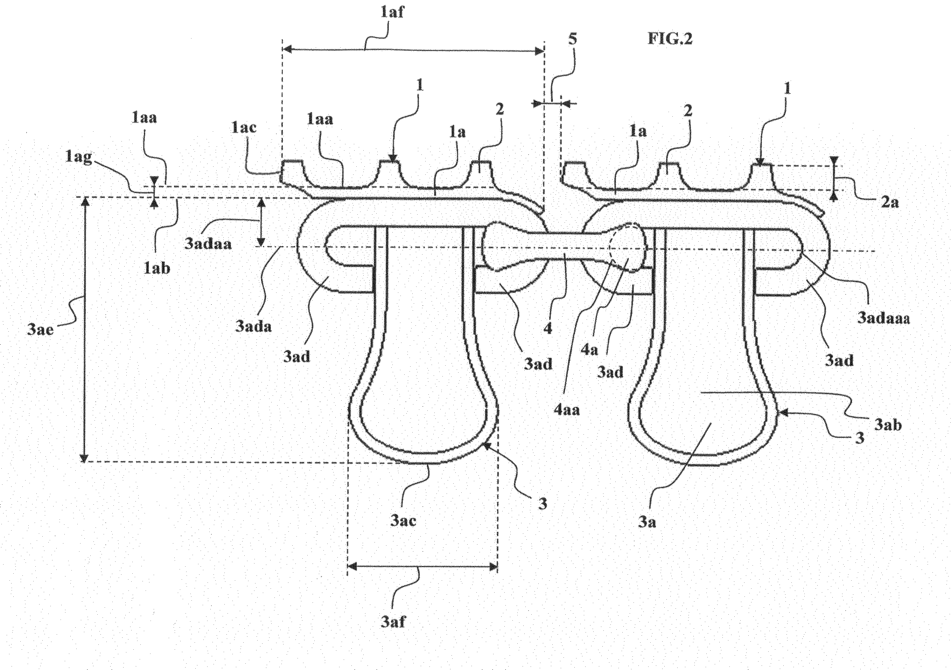

The combiner 4 is a chain known per se or another connecting means known per se, such as a loop welded together out of metal, whereby the chain track is connected by its ends by a chain track connector known per se on a tyre/tyres. Figure 2 shows the gap 5 between the grouser shoes.

The Figures show a chain track for use in forest machines or another work machine, or in their trailers on one or more tyres so that the chain track covers the tyre or tyres in their entirety, the chain track having grouser shoes 1, the grouser shoe 1 having a body 1a and side guides 3, the body 1a having an outer surface 1aa, inner surface 1ab, sides 1ac, and ends 1ad.

The distance 3adaa between the inner surface 1ab of the body la of the inventive grouser shoe 1 and the centre line 3ada of the fastening loop 3ad is 15 - 35 mm, measured from the inner surface 1ab of the body 1a of the grouser shoe 1. At its largest, the distance 3adaa is 35 mm as measured from the inner surface 1ab of the body 1a of the grouser shoe 1. The outer surface 1aa of the body 1a of the grouser shoe 1 has a straight portion lah, as seen from the front, the straight portion 1ah of the body 1a being most preferably the same as the width of the tyre, or advantageously at least 70 percent of the length 1ae of the body 1a. The clearance between the sides 1ac of successive grouser shoes 1 of the chain track, that is, the grouser shoe gap 5, is 20 mm or less. The height 3ae of the side guide 3 is as large as or larger than 195 mm or 50 - 80 percent of the height of the tyre. The height of the tyre refers to the height dimension of the tyre, not the diameter of the tyre. The outer surface 1aa of the grouser shoe 1 is closed. The height 2a of the traction elevation 2 is 20 - 35 mm.

The chain track according to the invention is used in the same way as the known chain tracks.

It is apparent to a person skilled in the art that the above exemplary embodiments are rather simple in structure and operation for the purposes of illustration. By following the model shown in this patent application, it is possible to construct different structural solutions that utilise the inventive idea disclosed in this patent application. The invention is not restricted to the alternatives disclosed in the above, but many variations are possible within the scope of the inventive idea defined by the attached claims

## Claims

1. A chain track for use in a forest machine or another work machine, or in their trailers on one or more tyres, the chain track being arranged to cover the tyre or tyres in their entirety, said chain track having grouser shoes (1) comprising a body (1a) having an inner surface (lab) seating against the tyre or tyres, an outer surface (1aa), two opposite sides (lac) extending in a transverse direction of the chain track, and two opposite ends (1ad) extending in a longitudinal direction of the chain track, and opposite side guides (3) seating on opposite side surfaces of the tyre or tyres, **characterised in that** each side guide (3) comprises a body (3a) extending obliquely downwards along the side surface of the tyre or tyres and a fastening loop (3ad) on each side of the body (3a) in the longitudinal direction of the chain track, said body (3a) comprising further a tip (3ac) extending beyond said fastening loop (3ad), adjacent grouser shoes (1) being connected to each other via a combiner (4) extending between adjacent fastening loops (3ad) in the side guides (3), a distance (3adaa) between the inner surface (1ab) of the body (1a) of the grouser shoe (1) and a centre line (3ada) of the fastening loop (3ad) being 15 - 35 mm as measured from the inner surface (lab) of the body (1a) of the grouser shoe (1).

2. A chain track as claimed in claim 1, **characterised in that** at its largest, the distance (3adaa) is 35 mm as measured from the inner surface (1ab) of the body (1a) of the grouser shoe (1).

3. A chain track as claimed in claim 1, **characterised in that** the outer surface (laa) of the body (1a) of the grouser shoe (1) has a straight portion (1ah), as seen from the front, the straight portion (1ah) of the body (1a) being most preferably the same as the width of the tyre, or advantageously at least 70 percent of the length (1ae) of the body (1a).

4. A chain track as claimed in claim 1, **characterised in that** the clearance between the sides (lac) of successive grouser shoes (1) of the chain track, the grouser shoe gap (5), is 20 mm or less.

5. A chain track as claimed in claim 1, **characterised in that** the height (3ae) of the side guide (3) is as large as or larger than 195 mm or 50 - 80 percent of the height of the tyre.

6. A chain track as claimed in claim 1, **characterised in that** the outer surface (laa) of the grouser shoe (1) is closed.

7. A chain track as claimed in claim 1, **characterised in that** the height (2a) of the traction elevation (2) is 20 - 35 mm.

## Patentansprüche

1. Raupenkette zur Verwendung in einer Forstmaschine oder einer anderen Arbeitsmaschine oder in deren Anhängern an einem oder mehreren Reifen, wobei die Raupenkette angeordnet ist, den Reifen oder die Reifen in ihrer Gesamtheit abzudecken, wobei die Raupenkette Stegplatten (1) aufweist, die einen Körper (1a) mit einer Innenfläche (lab), die am Reifen oder an den Reifen ansitzt, einer Außenfläche (laa), zwei gegenüberliegenden Seiten (lac), die sich in eine Querrichtung der Raupenkette erstrecken, und zwei gegenüberliegenden Enden (1ad), die sich in eine Längsrichtung der Raupenkette erstrecken, sowie gegenüberliegende Seitenführungen (3), die an gegenüberliegenden Seitenflächen des Reifens oder der Reifen ansitzen, umfassen, **dadurch gekennzeichnet, dass** jede Seitenführung (3) einen Körper (3a), der sich entlang der Seitenfläche des Reifens oder der Reifen schräg nach unten erstreckt, und eine Befestigungsschlaufe (3ad) auf jeder Seite des Körpers (3a) in die Längsrichtung der Raupenkette umfasst, wobei der Körper (3a) ferner eine Spitze (3ac) umfasst, die sich über die Befestigungsschlaufe (3ad) hinaus erstreckt, wobei benachbarte Stegplatten (1) via einen Kombinierer (4), der sich zwischen benachbarten Befestigungsschlaufen (3ad) in den Seitenführungen (3) erstreckt, miteinander verbunden sind, wobei ein Abstand (3adaa) zwischen der Innenfläche (lab) des Körpers (1a) der Stegplatte (1) und einer Mittellinie (3ada) der Befestigungsschlaufe (3ad) 15-35 mm beträgt, wie von der Innenfläche (lab) des Körpers (1a) der Stegplatte (1) gemessen.

2. Raupenkette nach Anspruch 1, **dadurch gekennzeichnet, dass** der größte Abstand (3adaa), wie von der Innenfläche (lab) des Körpers (1a) der Stegplatte (1) gemessen, 35 mm beträgt.

3. Raupenkette nach Anspruch 1, **dadurch gekennzeichnet, dass** die Außenfläche (1aa) des Körpers (1a) der Stegplatte (1) von vorn gesehen einen geraden Abschnitt (1ah) aufweist, wobei der gerade Abschnitt (1ah) des Körpers (1a) am bevorzugtesten mit der Breite des Reifens identisch ist oder vorteilhafterweise mindestens 70 Prozent der Länge (1ae) des Körpers (1a) entspricht.

4. Raupenkette nach Anspruch 1, **dadurch gekennzeichnet, dass** das Spiel zwischen den Seiten (1ac) von aufeinanderfolgenden Stegplatten (1) der Raupenkette, der Stegplattenspalt (5), 20 mm oder weniger beträgt.

5. Raupenkette nach Anspruch 1, **dadurch gekennzeichnet, dass** die Höhe (3ae) der Seitenführung (3) 195 mm oder 50 bis 80 Prozent der Höhe des Reifens groß oder größer ist.

6. Raupenkette nach Anspruch 1, **dadurch gekennzeichnet, dass** die Außenfläche (1aa) der Stegplatte (1) geschlossen ist.

7. Raupenkette nach Anspruch 1, **dadurch gekennzeichnet, dass** die Höhe (2a) der Traktionselevation (2) 20-35 mm beträgt.

## Revendications

1. Chenille destinée à être utilisée dans une machine de foresterie ou une autre machine d'usinage, ou sur leurs remorques sur un ou plusieurs pneus, la chenille étant agencée pour recouvrir le pneu ou les pneus dans leur intégralité, ladite chenille ayant des patins à crampon (1) comprenant un corps (1a) ayant une surface interne (lab) s'installant contre le pneu ou les pneus, une surface externe (1aa), deux côtés (lac) opposés s'étendant dans une direction transversale de la chenille, et deux extrémités (1ad) opposées s'étendant dans une direction longitudinale de la chenille, et des guides latéraux (3) opposés s'installant sur des surfaces latérales opposées du pneu ou des pneus, **caractérisée en ce que** chaque guide latéral (3) comprend un corps (3a) s'étendant de manière oblique vers le bas le long de la surface latérale du pneu ou des pneus et une boucle de fixation (3ad) de chaque côté du corps (3a) dans la direction longitudinale de la chenille, ledit corps (3a) comprenant en outre une pointe (3ac) s'étendant au-delà de ladite boucle de fixation (3ad), les patins à crampon (1) adjacents étant raccordés entre eux via un dispositif de combinaison (4) s'étendant entre les boucles de fixation (3ad) adjacentes dans les guides latéraux (3), une distance (3adaa) entre la surface interne (lab) du corps (1a) du patin à crampon (1) et une ligne centrale (3ada) de la boucle de fixation (3ad) étant de 15 à 35 mm, telle que mesurée à partir de la surface interne (1ab) du corps (1a) du patin à crampon (1).

2. Chenille selon la revendication 1, **caractérisée en ce qu'**à son maximum, la distance (3adaa) est de 35 mm, telle que mesurée à partir de la surface interne (1ab) du corps (1a) du patin à crampon (1).

3. Chenille selon la revendication 1, **caractérisée en ce que** la surface externe (1aa) du corps (1a) du patin à crampon (1) a une partie droite (1ah), comme observé de dessus, la partie droite (1ah) du corps (1a) étant, de manière préférée entre toutes, la même que la largeur du pneu, ou de manière avantageuse au moins 70 pour cent de la longueur (1ae) du corps (1a).

4. Chenille selon la revendication 1, **caractérisée en ce que** le jeu entre les côtés (1ac) des patins à crampon (1) successifs de la chenille, l'espace de patin à crampon (5) est de 20 mm ou moins.

5. Chenille selon la revendication 1, **caractérisée en ce que** la hauteur (3ae) du guide latéral (3) est aussi grande que ou supérieure à 195 mm ou 50 à 80 pour cent de la hauteur du pneu.

6. Chenille selon la revendication 1, **caractérisée en ce que** la surface externe (1aa) du patin à crampon (1) est fermée.

7. Chenille selon la revendication 1, **caractérisée en ce que** la hauteur (2a) de la hauteur de traction (2) est de 20 à 35 mm.
